# EUROPÄISCHE PATENTSCHRIFT

(11) **EP 0 381 626 B1**
(45) Veröffentlichungstag und Bekanntmachung des Hinweises auf die Patenterteilung: **23.03.1994**
(21) Anmeldenummer: 90810064.7
(22) Anmeldetag: 26.01.1990
(51) Int. Cl.: B23B 29/034

(54) **Rotierbares Innendrehwerkzeug**
Rotary boring tool
Outil rotatif à aléser

(30) Priorität: 31.01.1989 CH 324/89
(43) Veröffentlichungstag der Anmeldung: 08.08.1990
(73) Patentinhaber: ROBERT KÜNZLER AG, 9442 Berneck (CH)
(72) Erfinder: Künzler, Robert, CH-9442 Berneck (CH)
(74) Vertreter: Riederer, Conrad A., Dr.

(56) Entgegenhaltungen:
- DE-A- 1 477 356
- DE-A- 2 708 025
- FR-A- 2 159 719
- PATENT ABSTRACTS OF JAPAN, unexamined applications, Sektion M, Band 1, Nr. 16,23. MUrz 1977 THE PATENT OFFICE JAPANESE GOVERNMENT page 1390 M 76
- SOVIET INVENTIONS ILLUSTRATED,Sektionen P,Q, Woche C 51, 4. Februar 1981DERWENT PUBLICATIONS LTD., London, P 54 * SU-732 079.

## Beschreibung

Die Erfindung betrifft ein rotierbares Innendrehwerkzeug mit einem Grundkörper.

Als sogenannter Wohlhaupter-Kopf ist ein Innendrehwerkzeug bekannt geworden, bei welchem ein stangenförmiger Schneidenträger mittels eines kurzen, quer zur Drehachse verfahrbaren Schlittens entsprechend dem gewünschten Innendurchmesser der Bohrung in dem zu bearbeitenden Werkstück verstellt werden kann. Mit dem bekannten Innendrehwerkzeug kann jedoch nur mit geringen Drehzahlen gearbeitet werden, weil eine starke Unwucht besteht. Auch ist die Einhaltung genauer Toleranzen nicht möglich, weil der kurze Schlitten keine sehr genaue Einstellung erlaubt und sich bereits ein geringes Spiel nachteilig auf die Masshaltigkeit auswirkt.

Im Patent Abstracts of Japan, unexamined applications, section M, Vol. 1, Nr. 16, 23 March 1977, page 1390, M 76, Kokai Nr. 51-130 976, wird ein Werkzeughalter mit einem verschiebbaren Schneidenträger beschrieben. Der Schneidenträger weist einen Schaft auf, der in einer Bohrung einer Schraube gelagert und mit einer Fixierschraube befestigt ist. Die Bohrung ist in einem kleinen Winkel zur Schraubenachse angeordnet. Die Schraube selbst ist wiederum in einer Bohrung eines Grundkörpers verschiebbar gelagert, die in einem kleinen Winkel zur Rotationsachse des Werkzeughalters angeordnet ist. In einem Schlitz des Grundkörpers befindet sich eine Stellmutter, mit welcher die Schraube zusammen mit dem Schneidenträger verschoben werden kann. Bei dieser Bewegung wird die Schneide des Werkzeugs auch radial verstellt. Zur Drehsicherung weist die Schraube einen Schraubenkopf mit einem axialen Schlitz auf, in welche ein zylindrischer Vorderteil einer Sicherungsschraube eingreift. Der beschriebene Werkzeughalter ist kompliziert im Aufbau. Das Mass der möglichen Verstellung der Schneide wird durch die Länge des Schraubenkopfs begrenzt. Infolge des Spiels zwischen Grundkörper und Mutter und zwischen dem Gewinde der Mutter und der Schraube ist axiales Spiel des Werkzeugs möglich.

Im Gegensatz zum vorangehend beschriebenen Werkzeug, bei dem der Schneidenträger in einem kleinen Winkel zum Werkzeughalter verschiebbar angeordnet ist, zeigt die FR-A-2,159,719 ein Werkzeug, bei welchem der Schneidenträger im rechten Winkel oder einem Winkel von 60 Grad zum Werkzeughalter verschiebbar angeordnet ist. Zur Aufnahme des Schneidenträgers dient eine erste Sackbohrung. Eine zweite Sackbohrung verläuft in umgekehrter Richtung von der Gegenseite her parallel zur ersten Sackbohrung und schneidet diese an. In der zweiten Sackbohrung ist eine Stellschraube angeordnet, welche in eine Anzahl von Zähnen des Schneidenträgers eingreift. Die Stellschraube wird durch einen Stellring, einen Federstift oder eine Schraube, welche in eine Rille am Stellschraubenkörper eingreift, an einer axialen Bewegung gehindert. Durch Drehen der Stellschraube kann daher der Schneidenträger verschoben werden. Diese Konstruktion hat die Nachteile des eingangs beschriebenen Wohlhaupter-Kopfes. Wegen der Anordnung des Schneidenträgers quer oder in einem Winkel von 60 Grad zur Werkzeugachse ist die erste Sackbohrung notgedrungen kurz, so dass sich bereits ein geringes Spiel nachteilig auf die erzielbare Masshaltigkeit auswirkt. Nachteilig ist ferner, dass bereits eine geringe Drehung der Verstellschraube eine grosse Verschiebung der Schneide in radialer Richtung bewirkt und somit eine Feineinstellung unmöglich ist. Besonders nachteilig ist ferner, dass sich die offenbarte Konstruktion nicht für Werkzeuge zur Bearbeitung von Bohrungen mit relativ kleinen Durchmessern eignet, denn aus dem kleinen Durchmesser ergibt sich Platzmangel. Dieser wiederum führt wegen der durch die quer oder in einem Winkel von 60 Grad verlaufenden Sacklöcher zu Fertigkeitsproblemen. Weiter bewirkt der Platzmangel, dass der Verstellbereich der Schneide zu klein und die Führung für die Schneidenträger zu kurz wird.

Es ist daher Aufgabe der vorliegenden Erfindung, ein rotierbares Innendrehwerkzeug zu schaffen, welches mindestens einen Teil der angeführten Nachteile nicht aufweist. Insbesondere soll das Innendrehwerkzeug ein Arbeiten mit hohen Drehzahlen und hoher Massgenauigkeit ermöglichen.

Erfindungsgemäss wird diese Aufgabe durch ein rotierbares Innendrehwerkzeug gemäss Anspruch 1 gelöst. Da im Gegensatz zum vorbekannten Stand der Technik die Führung relativ lang ausgebildet ist, wird der Schneidenträger, der sehr starr ausgestaltet sein kann, sicher gehaltert. Es kann daher eine hohe Massgenauigkeit erzielt werden. Vibrationsfreies Arbeiten trägt zu hoher Oberflächengüte beim bearbeiteten Werkstück bei. Da ferner eine Verschiebung des Schneidenträgers entlang der Führung nur eine geringe Unwuchtsänderung verursacht, lässt das erfindungsgemässe Innendrehwerkzeug sehr hohe Drehzahlen zu, ohne dass die vorhandene geringe Unwucht sich störend bemerkbar macht. Dies wiederum ermöglicht hohe Bearbeitungsgeschwindigkeiten und damit eine grosse Produktionssteigerung unter Beibehaltung einer hohen Oberflächengüte der Bohrung.

Dadurch, dass sowohl die Bohrung als auch der in die Bohrung passende Schaft mit relativ geringen Kosten mit einer Schiebesitzpassung hergestellt werden können, und dass Arretiermittel vorgesehen sind, wird garantiert, dass das einmal eingestellte Mass dauerhaft beibehalten wird. Es besteht also praktisch keine Gefahr einer Ausschusserzeugung wegen einer ungewollten Verstellung des Innendrehwerkzeugs während des Betriebs. Die Stellvorrichtung ermöglicht, das Innendrehwerkzeug auf den gewünschten Bearbeitungsdurchmesser einzustellen. Beim Einstellen wird durch die Friktionseinrichtung die Relativbewegung zwischen Schneidenträger und Grundkörper leicht erschwert, aber doch zugelassen.

Die Steigung der Schraube und der Winkel der Führung zur Rotationsachse können so gewählt werden, dass eine Umdrehung eine vorbestimmte Aenderung des Bearbeitungsdurchmessers bewirkt. Beträgt der Winkel beispielsweise 1,433 Grad und hat die verwendete Schraube eine Steigung von 1 mm, so bewirkt eine Umdrehung der Schraube eine Aenderung von 0,05 mm des Bearbeitungsdurchmessers.

Vorteilhaft ist die Führung im Inneren des Grundkörpers angeordnet. Dies hat ausser dem bereits erwähnten Vorteil der geringen Unwuchtsänderung bei einer Verstellung des Schneidenträgers den Vorteil, dass die Führung von äusseren Einflüssen geschützt wird. Das Innendrehwerkzeug bleibt daher während einer langen Lebensdauer sehr präzis.

Da die Führung in einem kleinen Winkel zur Rotationsachse angeordnet ist, trifft dies grundsätzlich auch für den Schneidenträger zu, der von dieser Führung geführt ist. Es ist aber möglich, den Vorderteil des Schneidenträgers derart abzukröpfen, dass er parallel zur Rotationsachse angeordnet ist. Dies ermöglicht es, diesen Vorderteil sehr massiv auszugestalten. Eine derart starre und massive Ausführung ermöglicht einen hohen Vorschub und eine hohe Spanstärke, ohne dass dadurch die Bearbeitungsqualität leidet.

Der Schaft des Schneidenträgers weist zweckmässigerweise eine zur Schaftachse parallele Fläche auf, und die Arretiermittel werden vorteilhaft durch mindestens eine Schraube, vorzugsweise zwei Schrauben, gebildet, welche im Grundkörper praktisch senkrecht zu der genannten Fläche in einem Gewindeloch angeordnet ist bzw. sind. Dies ermöglicht eine Arretierung auf einfache Weise. Die Friktionsmittel können beispielsweise durch eine Kunststoffschraube gebildet werden, die im Grundkörper praktisch senkrecht zur genannten Fläche in einem Gewindeloch angeordnet ist. Dies stellt eine besonders einfache und zweckmässige Ausbildung dar.

Es wäre möglich, am Vorderteil des Schneidenträgers die notwendige Schneide auszubilden. Zweckmässigerweise trägt jedoch der Vorderteil des Schneidenträgers eine Wendeplatte.

Der Grundkörper ist vorteilhaft zylindrisch. Es wäre aber auch möglich, die Bohrung in einer anderen Werkzeugaufnahme vorzusehen, z.B. in einem Futter, einem Steil- oder Morsekegel.

Ausführungsbeispiele der Erfindung werden nun unter Bezugnahme auf die Zeichnung näher beschrieben. Es zeigt:
- Fig. 1: eine Ansicht eines ersten Ausführungsbeispiels des rotierbaren Innendrehwerkzeugs mit einem Steckschlüssel zur Aenderung des Bearbeitungsdurchmessers,
- Fig. 2: ein Schnitt durch den Grundkörper des Innendrehwerkzeugs von Fig. 1 mit den normalerweise im Grundkörper angeordneten Teilen,
- Fig. 3: eine Ansicht von rechts des Grundkörpers von Fig. 2
- Fig. 4: ein zweites Ausführungsbeispiel des rotierbaren Innendrehwerkzeugs mit abgekröpften Schneideträger.

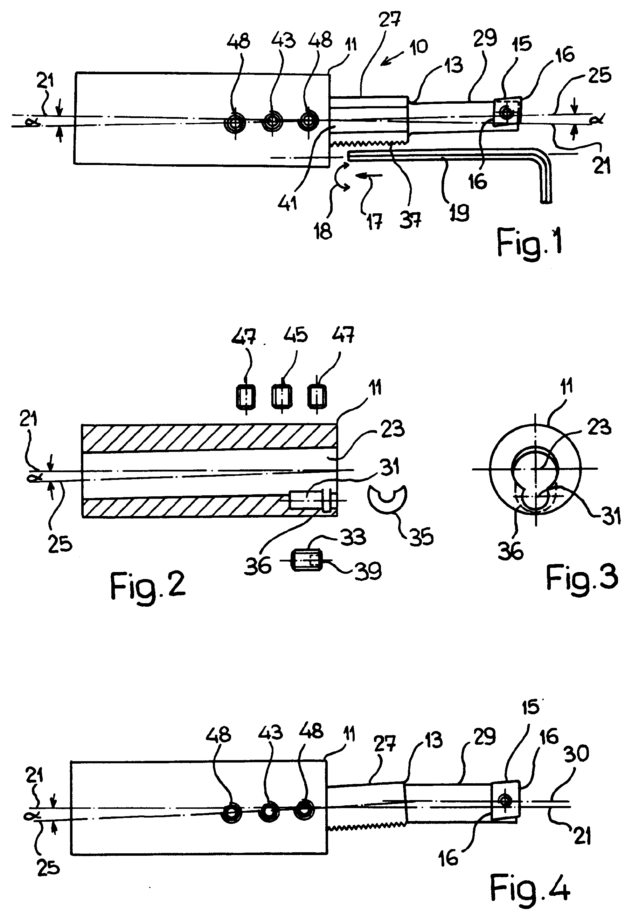

Das in den Figuren 1 bis 3 dargestellte rotierbare Innendrehwerkzeug 10 besteht im wesentlichen aus dem zylindrischen Grundkörper 11 und dem stangenförmigen Schneidenträger 13 mit der Wendeplatte 15. Die Wendeplatte 15 besitzt zwei Schneiden 16, von welcher sich eine in Arbeitsstellung befindet. Mit der Bezugsziffer 21 ist die Rotationsachse des Innendrehwerkzeugs bezeichnet. Wie mit den Pfeilen 17 und 18 angedeutet, kann der Bearbeitungsdurchmesser durch Einstecken und Drehen des Steckschlüssels 19 den Erfordernissen entsprechend verändert werden.

In der gezeichneten Form, also mit einem zylindrischen Grundkörper 11, eignet sich das Innendrehwerkzeug zur Verwendung mit eine Spannzange oder einem Weldon-Futter.

Wie insbesondere aus Figur 2 ersichtlich ist, dient als Führung für den Schneidenträger 13 eine Bohrung 23, die in einem kleinen Winkel Alpha zur Rotationsachse 21 angeordnet ist. Die Bohrungsachse ist mit der Bezugsziffer 25 gekennzeichnet. Der Winkel Alpha liegt im Bereich von etwa 0,5 bis 3 Grad, wird aber vorteilhaft so gewählt, dass eine volle Drehung des Steckschlüssels 19 eine praktische Massänderung des Bearbeitungsdurchmessers bewirkt, z.B. 0,05 mm. Der Benützer kann dann leicht errechnen, dass beispielsweise zehn Umdrehungen eine Massänderung von 0,5 mm bewirken.

Der Schneidenträger 13 weist einen in die Bohrung 23 mit Schiebesitz passenden Schaft 27 und einen die Wendeplatte 15 tragenden Vorderteil 29 auf. Bei der Ausführungsform von Figur 4 ist der Vorderteil 29 derart abgekröpft, dass seine Achse 30 parallel zur Rotationsachse 21 verläuft. Dies ermöglicht es, den Durchmesser des Vorderteils 29 massiver auszugestalten, ohne dass beim Ausdrehen eines relativ tiefen Lochs der hintere Abschnitt des Vorderteils 29 die Lochwandung touchiert. Die besonders starre Ausführung von Figur 4 verhindert ein unzulässiges Durchbiegen des Werkzeugs bei relativ grossen Spanstärken.

Eine Stelleinrichtung ermöglicht eine präzise Einstellung. Wie insbesondere aus Figur 2 ersichtlich, ist im Grundkörper 11 eine Aussparung 31 für eine Stellschraube 33 vorgesehen. Nach dem Einsetzen der Stellschraube 33 wird die Aussparung 31 durch die Scheibe 35 verschlossen. Die Schreibe 35 passt in die Ausnehmung 36 des Grundkörpers 11. Am Schaft 27 ist ein partielles Innengewinde 37 vorgesehen, in welche das Gewinde der Stellschraube 33 eingreift. Die Stellschraube 33 wird durch eine Schraube mit Innensechskant 39 gebildet, in welchen der Steckschlüssel 19 eingeführt werden kann. Durch Drehen des Steckschlüssels 19 kann daher der Schneidenträger 13 verschoben werden.

Der Schaft 27 besitzt eine zur Schaftachse 25 parallele Fläche 41. Im Grundkörper 11 dient eine Gewindebohrung 43 der Aufnahme einer Kunststoffschraube 45, die praktisch senkrecht auf die Fläche 41 einwirkt. Die Kunststoffschraube 45 dient als Friktionseinrichtung, welche eine Relativbewegung zwischen Grundkörper 11 und Schneidenträger 13 erschwert. Die Kunststoffschraube 45 lässt jedoch eine solche Relativbewegung beim Drehen der Stellschraube 33 zu. Der Arretierung des Schneidenträgers 13 in der gewünschten Stellung dienen zwei Innensechskantschrauben 47, welche in die Gewindelöcher 48 eingeschraubt sind. Die Innensechskantschrauben 47 wirken ebenfalls auf die Fläche 41.

## Patentansprüche

1. Rotierbares Innendrehwerkzeug, mit einem Grundkörper (11), einem verschiebbaren Schneidenträger (13), welcher einen Schaft (27) und einen Vorderteil (29) aufweist, einer in einem kleinen Winkel (alpha) zur Rotationsachse (21) angeordneten Bohrung (23) als Führung (23) für den Schaft (27), einer Stellvorrichtung, welche ein am Schaft (27) angebrachtes partielles Gewinde (37) und eine in das partielle Gewinde (37) eingreifende, in einer Aussparung (31) des Grundkörpers (11) angeordnete Stellschraube (33) aufweist, welche von vorn zugänglich ist, Friktionsmitteln (45), um eine Relativbewegung zwischen Grundkörper (11) und Schneidenträger (13) zu erschweren, Arretiermitteln (47), um den Schneidenträger (13) in der gewünschten Stellung zu arretieren, und mindestens einer auf dem Vorderteil (29) angeordneten oder angebrachten Schneide (16).

2. Innendrehwerkzeug nach Anspruch 1, dadurch gekennzeichnet, dass der kleine Winkel (Alpha) im Bereich von 0,5 bis 3 Grad liegt.

3. Innendrehwerkzeug nach Anspruch 1 oder 2, dadurch gekennzeichnet, dass die Führung (23) im Innern des Grundkörpers (11) angeordnet ist.

4. Innendrehwerkzeug nach Anspruch 4, dadurch gekennzeichnet, dass der Vorderteil (29) des Schneidenträgers (13) derart abgekröpft ist, dass er parallel zur Rotationsachse (21) angeordnet ist.

5. Innendrehwerkzeug nach einem der Ansprüche 1 bis 4, dadurch gekennzeichnet, dass der Schaft (27) des Schneidenträgers (13) eine zur Schaftachse (25) parallele Fläche (41) aufweist, und dass die Arretiermittel durch mindestens eine Schraube (47), vorzugsweise zwei Schrauben (47) gebildet werden, welche im Grundkörper (11) praktisch senkrecht zur genannten Fläche (41) in einem Gewindeloch (48) angeordnet ist, bzw. sind.

6. Innendrehwerkzeug nach Anspruch 5, dadurch gekennzeichnet, dass die Friktionsmittel durch eine Kunststoffschraube (45) gebildet werden, die im Grundkörper (11) praktisch senkrecht zur genannten Fläche in einem Gewindeloch (43) angeordnet ist.

7. Innendrehwerkzeug nach einem der Ansprüche 1 bis 6, dadurch gekennzeichnet, dass der Schneidenträger (13) mit einer Wendeplatte (15) ausgerüstet ist, welche mehrere Schneiden (16) aufweist.

8. Innendrehwerkzeug nach einem der Ansprüche 1 bis 7, dadurch gekennzeichnet, dass der Grundkörper (11) eine zylindrische Form besitzt.

9. Innendrehwerkzeug nach einem der Ansprüche 1 bis 8, dadurch gekennzeichnet, dass der Grundkörper (11) als Werkzeugaufnahme z.B. in Form eines Futters oder eines Steil- oder Morsekegels ausgebildet ist.

10. Innendrehwerkzeug nach einem der Ansprüche 1 bis 9, dadurch gekennzeichnet, dass der Winkel (alpha), in welchem die Führung (23) zur Rotationsachse (21) angeordnet ist, 1,433 Grad beträgt, und dass die Stellschraube (33) eine Steigung von 1 mm aufweist.

## Claims

1. Rotatable internal cutting tool comprising a base (11), a slidable cutter holder (13) which has a shaft (27) and a front portion (29), a bore (23) arranged at a small angle (alpha) to the axis of rotation (21) to serve as guide for the shaft (27), an adjusting device which comprises a partial thread (37) formed on the shaft (27), and an adjusting screw (33) which is located in a recess (31) of the base (11) and is accessible from the front and engaging into said partial thread (33), friction means (45) to hinder a relative motion between the base (11) and the cutter holder (13), blocking means (47) to block the cutter holder (13) in the desired position, and at least one cutter (16) mounted or formed on the front portion (29).

2. Internal cutting tool as in claim 1 characterized in that the small angle is in the region of 0,5 to 3 degrees.

3. Internal cutting tool as in claim 1 or 2, characterized in that the guide (23) is located in the interior of the base (11).

4. Internal cutting tool as in claim 4, characterized in that the front portion (29) of the cutter holder (13) deviates at an angle in such a way to extend parallel to the axis of rotation (21).

5. Internal cutting tool as in one of the claims 1 to 4, characterized in that the shaft (27) of the cutter holder (13) has a surface parallel to the axis (25) of the shaft, and in that the blocking means are provided by a least one screw, preferably two screws, each being located in a threaded bore (48) arranged in the base (11) substantially vertically to said surface (41).

6. Internal cutting tool as in claim 5, characterized in that the friction means are provided by a screw of plastics which is located in a threaded hole (43) arranged in the base (11) substantially vertically to said surface.

7. Internal cutting tool as in claim 1 to 6 characterized in that the cutter holder (13) is provided with a reversible plate which has a plurality of cutting edges (16).

8. Internal cutting tool as in one of the claims 1 to 7, characterized in that the base has a cylindrical form.

9. Internal cutting tool as in one of the claims 1 to 8, characterized in that the base (11) is a tool carrier e.g. in form of a chuck or a steep angle taper shank or a morse taper shank.

10. Internal cutting tool as in one of the claims 1 to 9, characterized in that the angle (alpha) in which the guide (23) is arranged with respect to the axis of rotation (21) is 1,433 degrees, and in that the adjusting screw (33) has a pitch of 1 mm.

## Revendications

1. Outil rotatif de creusage au tour, comprenant un corps de base (11), un porte-lame réglable (13) qui comporte une tige (27) et une partie antérieure (29), une forure (23) qui forme un petit angle (α) avec l'axe de rotation (21) et qui sert de guide (23) pour la tige (27), un dispositif de réglage qui comprend un filetage partiel (37) formé sur la tige (27) et une vis de réglage (33) qui est disposée dans un évidement (31) du corps de base (11), est en prise avec le filetage partiel (37) et est accessible par l'avant, des moyens de friction (45) pour rendre plus difficile à un mouvement relatif entre le corps de base (11) et le porte-lame (13), des moyens d'arrêt (47) pour bloquer le porte-lame (13) dans la position désirée, et au moins une lame (16) montée ou formée sur la partie antérieure (29).

2. Outil de creusage au tour selon la revendication 1, caractérisé en ce que le petit angle (α) se situe dans la plage de 0,5 à 3°.

3. Outil de creusage au tour selon la revendication 1 ou 2, caractérisé en ce que le guide (23) est disposé à l'intérieur du corps de base (11).

4. Outil de creusage au tour selon la revendication 1, caractérisé en ce que la partie antérieure (29) du porte-lame (13) est coudée de façon à être disposée parallèlement à l'axe de rotation (21).

5. Outil de creusage au tour selon l'une quelconque des revendications 1 à 4, caractérisé en ce que la tige (27) du porte-lame (13) présente un méplat (41) parallèle à son axe (25), et en ce que les moyens d'arrêt sont constitués par au moins une vis (47), de préférence par deux vis (47) qui sont disposées chacune dans un trou taraudé (48) qui est formé dans le corps de base (11) et qui est pratiquement perpendiculaire audit méplat (41).

6. Outil de creusage au tour selon la revendication 5, caractérisé en ce que les moyens de friction sont constitués par une vis en matière plastique (45) qui est disposée dans un trou taraudé (43) qui est formé dans le corps de base (11) et qui est pratiquement perpendiculaire audit méplat.

7. Outil de creusage au tour selon l'une quelconque des revendications 1 à 6, caractérisé en ce que le porte-lame (13) est muni d'une plaquette réversible (15) qui comporte plusieurs arrêtes de coupe (16).

8. Outil de creusage au tour selon l'une quelconque des revendications 1 à 7, caractérisé en ce que le corps de base (11) a une forme cylindrique.

9. Outil de creusage au tour selon l'une quelconque des revendications 1 à 8, caractérisé en ce que le corps de base (11) est réalisé sous forme de raccord d'outil, par exemple sous la forme d'un mandrin de serrage ou sous celle d'un cône rapide ou d'un cône Morse.

10. Outil de creusage au tour selon l'une quelconque des revendications 1 à 9, caractérisé en ce que l'angle (α) que le guide (23) forme avec l'axe de rotation (21) mesure 1,433°, et en ce que la vis de réglage (33) a un pas de 1 mm.
